(19) **Europäisches Patentamt**
**European Patent Office**
**Office européen des brevets**

(11) **EP 3 290 557 B1**

(12) **EUROPEAN PATENT SPECIFICATION**

(45) Date of publication and mention
of the grant of the patent:
**04.03.2020 Bulletin 2020/10**

(51) Int Cl.:
*D04H 3/011* (2012.01)   *A47C 27/12* (2006.01)
*A47G 27/02* (2006.01)   *B68G 3/00* (2006.01)
*D04H 3/016* (2012.01)   *D04H 3/018* (2012.01)
*D04H 3/16* (2006.01)

(21) Application number: **16786570.8**

(22) Date of filing: **28.04.2016**

(86) International application number:
**PCT/JP2016/063391**

(87) International publication number:
**WO 2016/175294 (03.11.2016 Gazette 2016/44)**

(54) **NET-LIKE STRUCTURE**

NETZARTIGE STRUKTUR

STRUCTURE DE TYPE FILET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2015 JP 2015091457
08.02.2016 JP 2016022102
01.04.2016 JP 2016074393**

(43) Date of publication of application:
**07.03.2018 Bulletin 2018/10**

(73) Proprietor: **Toyobo Co., Ltd.**
**Osaka-shi**
**Osaka 530-8230 (JP)**

(72) Inventors:
• **KOBUCHI, Shinichi**
**Osaka-shi**
**Osaka 530-8230 (JP)**
• **TANINAKA, Teruyuki**
**Otsu-shi**
**Shiga 520-0292 (JP)**
• **WAKUI, Hiroyuki**
**Otsu-shi**
**Shiga 520-0292 (JP)**

• **KURAMOTO, Takahiro**
**Osaka-shi**
**Osaka 530-8230 (JP)**
• **FUKUNISHI, Noriki**
**Osaka-shi**
**Osaka 530-8230 (JP)**
• **INOUE, Takuo**
**Tsuruga-shi**
**Fukui 914-8550 (JP)**
• **YAMADA, Yasushi**
**Osaka-shi**
**Osaka 530-8230 (JP)**

(74) Representative: **Müller-Boré & Partner**
**Patentanwälte PartG mbB**
**Friedenheimer Brücke 21**
**80639 München (DE)**

(56) References cited:
EP-A1- 1 665 957        EP-A1- 3 064 627
EP-A1- 3 064 628        JP-A- S5 936 757
JP-A- H07 189 105       JP-A- H07 189 105
US-A- 5 639 543

**Description**

The present invention relates to a net-like structure suitable for a net-like cushion material used for office chairs, furniture, sofas, beddings such as beds, seats for vehicles such as trains, automobiles, two-wheeled vehicles, baby buggies, child safety seats, and wheelchairs, and shock-absorbing mats such as floor mats and members for preventing collision and nipping, etc.

At present, as a cushion material used for furniture, beddings such as beds, and seats for vehicles such as trains, automobiles, and two-wheeled vehicles, a net-like structure is increasingly used.

Japanese Patent Laying-Open No. 7-68061 (PTD 1) discloses a net-like structure in which continuous linear bodies constituting the net-like structure are formed only of solid-section fibers (which mean fibers each having a solid cross section, hereinafter). The solid-section fibers are heavier compared with hollow-section fibers (which mean fibers each having a hollow cross section, hereinafter) formed of the same material and having the same fiber size as the solid-section fibers. In general, it is often the case that the weight of a net-like structure in which continuous linear bodies are formed only of solid-section fibers is reduced by reducing the fiber size of the continuous linear bodies or by reducing the number of fibers constituting the net-like structure, etc., compared with that in a net-like structure formed only of hollow-section fibers. As the result, however, the resultant net-like structure often has a bottom touch feeling.

Japanese Patent Laying-Open No. 7-173753 (PTD 2) discloses a net-like structure in which continuous linear bodies constituting the net-like structure are formed only of hollow-section fibers. A net-like structure constituted only of hollow-section fibers has such advantages that the weight is lighter compared with a net-like structure constituted only of solid-section fibers and the hardness is higher compared with a net-like structure constituted only of solid-section fibers when both of the net-like structures have the same weight as each other. However, hollow-section fibers are thicker than solid-section fibers. Therefore, the net-like structure constituted only of hollow-section fibers has the problem that soft touch is less likely to be imparted when the net-like structure is used as a cushion material or the like.

Japanese Patent Laying-Open No. 7-189105 (PTD 3) discloses a net-like structure constituted of continuous linear bodies having different fiber sizes. The net-like structure is constituted of a base layer that is formed of continuous linear bodies having a thicker fiber size and is involved in the absorption of vibration and the retention of the shape of the net-like structure and a surface layer that is formed of continuous linear bodies having a thinner fiber size, is soft and is involved in the property of uniformizing the distribution of pressure. In Japanese Patent Laying-Open No. 7-189105 (PTD 3), there is found a statement about a net-like structure in which a base layer formed of continuous linear bodies having a thicker fiber size is not melt-adhered to a surface layer formed of continuous linear bodies having a thinner fiber size. However, the net-like structure disclosed in Japanese Patent Laying-Open No. 7-189105 (PTD 3) and a net-like structure in which multiple net-like structures are laminated without melt-adhesion have the problem that the residual strain after 750 N constant load repeated compression, which is a measure of compression durability employed for the assessment of the degree of wearing and tearing of the net-like structure during actual use, is large.

PATENT DOCUMENT

PTD 1: Japanese Patent Laying-Open No. 7-68061
PTD 2: Japanese Patent Laying-Open No. 7-173753
PTD 3: Japanese Patent Laying-Open No. 7-189105

EP 3 064 628 A1 discloses a fibrous network structure having compression durability.

EP 3 064 627 A1 discloses an elastic network structure with quietness and lightweight properties.

EP 1 665 957 A1 discloses a cushion material formed of a spring-structured resin-molded product, a manufacturing method for the cushion material, and a mold used for the manufacturing method.

In view of the problems of the background art described above, an object of the present invention is providing a net-like structure having a reduced bottom touch feeling and excellent compression durability while keeping soft touch upon use.

After having devoted themselves to researches for solving the above problems, the present inventors have finally completed the present invention, which includes the followings.

[1] A net-like structure having a three-dimensional random loop bonded structure constituted of a thermoplastic elastomer continuous linear body, wherein the net-like structure has, in a thickness direction thereof, a thin fiber main region that mainly includes thin fibers having a fiber size of greater than or equal to 0.1 mm and less than or equal to 1.5 mm, a thick fiber main region that mainly includes thick fibers having a fiber size of greater than or equal to 0.4 mm and less than or equal to 3.0 mm and a mixed region that is located between the thin fiber main region and the thick fiber main region and includes the thin fibers and the thick fibers in a mixed state, wherein in the thin fiber main region, the percentage of the number of thin fibers included in a region of interest is greater than or equal to 90% of the total number of fibers included in the region, wherein in the thick fiber main region, the percentage of the number of thick fibers included in a region of interest is greater than or equal to 90% of the total number of fibers included in the region, and wherein said thin fibers are solid-section fibers each having a solid cross section and said thick fibers are hollow-section fibers each having a hollow cross section, the fiber sizes of the thick fibers are greater than those of the thin fibers by greater than or equal to 0.07 mm, and the residual strain after 750 N constant load repeated compression at pressurization from the side of the thin fiber main region of the net-like structure is less than or equal to 15%, as measured in accordance with the method specified herein. The fiber size as used herein refers to an average fiber size of a plurality of measured values as will be described later on a measuring method.

[2] The net-like structure according to [1], wherein the net-like structure has an apparent density of greater than or equal to 0.005 g/cm$^3$ and less than or equal to 0.20 g/cm$^3$, as measured in accordance with the method specified herein.

[3] The net-like structure according to [1] or [2], wherein the hysteresis loss at pressurization from the side of the thin fiber main region of the net-like structure is less than or equal to 60%, as measured in accordance with the method specified herein.

[4] A cushion material including a net-like structure as recited in any one of [1] to [3].

According to the present invention, a net-like structure having a reduced bottom touch feeling and excellent compression durability while keeping soft touch upon use can be provided. Therefore, it becomes possible to provide a net-like structure that can be used suitably in office chairs, furniture, sofas, beddings such as beds, seats for vehicles such as trains, automobiles and two-wheeled vehicles, etc.

BRIEF DESCRIPTION OF DRAWINGS

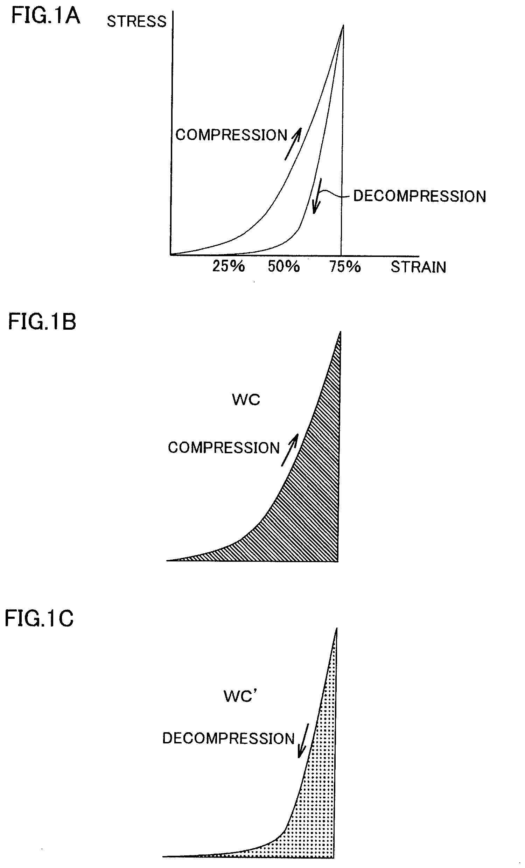

Fig. 1A is a schematic graph showing a second stress-strain curve in hysteresis loss measurement of a net-like structure.
Fig. 1B is a schematic graph showing a stress-strain curve at second compression in hysteresis loss measurement of a net-like structure.
Fig. 1C is a schematic graph showing a stress-strain curve at second decompression in hysteresis loss measurement of a net-like structure.

The embodiments of the present invention will be described hereinafter in detail. The net-like structure of the present invention is one having a three-dimensional random loop bonded structure constituted of a thermoplastic elastomer continuous linear body, wherein the net-like structure has, in a thickness direction thereof, a thin fiber main region that mainly includes thin fibers having a fiber size (average fiber size: this also applies to description below) of greater than or equal to 0.1 mm and less than or equal to 1.5 mm, a thick fiber main region that mainly includes thick fibers having a fiber size of greater than or equal to 0.4 mm and less than or equal to 3.0 mm and a mixed region that is located between the thin fiber main region and the thick fiber main region and includes the thin fibers and the thick fibers in a mixed state, the fiber size of the thick fibers is greater than that of each of the thin fibers by greater than or equal to 0.07 mm, and the residual strain after 750 N constant load repeated compression at pressurization from the side of the thin fiber main region of the net-like structure is less than or equal to 15%. The net-like structure of the present invention has soft touch upon use, because the fiber size of the thin fibers is greater than or equal to 0.1 mm and less than or equal to 1.5 mm. The net-like structure of the present invention has a reduced bottom touch feeling, because the fiber size of thick fibers is greater than that of the thin fibers by greater than or equal to 0.07 mm. The net-like structure of the present invention has excellent compression durability, because the mixed region is present between the thin fiber main region and the thick fiber main region and the residual strain after 750 N constant load repeated compression at pressurization from the thin fiber main region side is less than or equal to 15%.

The net-like structure of the present invention is a structure having a three-dimensional random loop bonded structure where a continuous linear body constituted of a thermoplastic elastomer is curled to form random loops and the loops are brought into contact with one another in a molten state to be bonded together.

Examples of the thermoplastic elastomer to be used in the present invention include a polyester-based thermoplastic elastomer, a polyolefin-based thermoplastic elastomer, a polyurethane-based thermoplastic elastomer, a polyamide-based thermoplastic elastomer and a thermoplastic ethylene-(vinyl acetate) copolymer elastomer. Among them, a polyester-based thermoplastic elastomer is preferred because of excellent compression durability and heat resistance thereof.

Examples of the polyester-based thermoplastic elastomer to be used in the present invention include a polyester-ether block copolymer having thermoplastic polyester as hard segments and a polyalkylene diol as soft segments and a polyester-ester block copolymer having an aliphatic polyester as soft segments.

An example of the polyester-ether block copolymer is a ternary block copolymer constituted of a dicarboxylic acid, a diol component and a polyalkylene diol. The dicarboxylic acid is at least one dicarboxylic acid selected from: an aromatic dicarboxylic acid such as terephthalic acid, isophthalic acid, naphthalene-2,6-dicarboxylic acid, naphthalene-2,7-dicarboxylic acid, and diphenyl-4,4'-dicarboxylic acid; an alicyclic dicarboxylic acid such as 1,4-cyclohexanedicarboxylic acid; an aliphatic dicarboxylic acid such as succinic acid, adipic acid, sebacic acid, and dimer acid; and ester-forming derivatives thereof. The diol component is at least one diol component selected from: an aliphatic diol such as 1,4-butanediol, ethylene glycol, trimethylene glycol, tetramethylene glycol, pentamethylene glycol, and hexamethylene glycol; an alicyclic diol such as 1,1-cyclohexanedimethanol and 1,4-cyclohexanedimethanol; and ester-forming derivatives thereof. The polyalkylene diol is at least one polyalkylene diol having a number average molecular weight of about 300-5000, such as polyethylene glycol, polypropylene glycol, polytetramethylene glycol, and glycol made of an ethylene oxide-propylene oxide copolymer.

An example of the polyester-ester block copolymer is a ternary block copolymer constituted of a dicarboxylic acid, a diol component and a polyester diol. Examples of the dicarboxylic acid and the diol component include those compounds mentioned above. The polyester diol is at least one polyester diol having a number average molecular weight of about 300-5000, such as polylactone.

Considering thermal adhesiveness, hydrolysis resistance, elasticity, heat resistance, etc., the polyester-ether block copolymer is especially preferably a ternary block copolymer constituted of terephthalic acid and/or naphthalene-2,6-dicarboxylic acid as the dicarboxylic acid, 1,4-butanediol as the diol component, and polytetramethylene glycol as the polyalkylene diol. The polyester-ester copolymer is especially preferably a ternary block copolymer constituted of terephthalic acid and/or a naphthalene 2,6-dicarboxylic acid as the dicarboxylic acid, 1,4-butane diol as the diol component and polylactone as the polyester diol. As an unusual example, a thermoplastic elastomer as mentioned above in which a polysiloxane-type soft segment is introduced can also be used.

From the standpoint of excellent compression durability, the content of the soft segment in the polyester-based thermoplastic elastomer to be used in the present invention is preferably greater than or equal to 15% by weight, more preferably greater than or equal to 25% by weight, even more preferably greater than or equal to 30% by weight, especially preferably greater than or equal to 40% by weight. From the standpoint of securing of hardness and excellent heat resistance/wear-and-tear resistance, the content is preferably less than or equal to 80% by weight, more preferably less than or equal to 70% by weight.

The polyolefin-based thermoplastic elastomer to be used in the present invention is preferably an ethylene-$\alpha$-olefin copolymer obtained by copolymerizing ethylene and an $\alpha$-olefin, more preferably a multi-block copolymer constituted of an ethylene-$\alpha$-olefin that is an olefin block copolymer. The reason why a multi-block copolymer constituted of an ethylene-$\alpha$-olefin is more preferable is that, in a general random copolymer, the joining chain length of the main chain is short, making it difficult to form a crystalline structure, resulting in the decrease in durability. For these reasons, the $\alpha$-olefin to be copolymerized with ethylene is an $\alpha$-olefin having greater than or equal to 3 carbon atoms.

Examples of the $\alpha$-olefin having greater than or equal to 3 carbon atoms include propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Preferred are 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Also, two or more of them can be used.

The random copolymer that is the ethylene-$\alpha$-olefin copolymer to be used in the present invention can be obtained by copolymerizing ethylene and an $\alpha$-olefin using a catalyst system having a specific metallocene compound and an organic metal compound as a basic configuration, and the multi-block copolymer can be obtained by copolymerizing ethylene and an $\alpha$-olefin using a chain shuttling catalyst. As required, two or more kinds of polymers polymerized by the above methods and polymers such as hydrogenated polybutadiene and hydrogenated polyisoprene can be blended.

The ratio between ethylene and the $\alpha$-olefin having greater than or equal to 3 carbon atoms in the ethylene-$\alpha$-olefin copolymer to be used in the present invention is preferably greater than or equal to 70 mol% and less than or equal to 95 mol% for ethylene and greater than or equal to 5 mol% and less than or equal to 30 mol% for the $\alpha$-olefin having greater than or equal to 3 carbon atoms. In general, it is known that a macromolecular compound is provided with elastomeric nature because hard segments and soft segments are present in a macromolecular chain. In the polyolefin-based thermoplastic elastomer to be used in the present invention, it is considered that ethylene plays a role of hard segments and the $\alpha$-olefin having greater than or equal to 3 carbon atoms plays a role of soft segments. Therefore, if the content of ethylene is less than 70 mol%, the amount of the hard segments will be small, reducing the recovery performance of rubber elasticity. The content of ethylene is more preferably greater than or equal to 75 mol%, even more preferably greater than or equal to 80 mol%. If the content of ethylene exceeds 95 mol%, the amount of the soft segments will be small, causing difficulty in exhibiting the elastomeric nature, and thus degrading cushioning performance. The content of ethylene is more preferably less than or equal to 93 mol%, even more preferably less than or equal to 90 mol%.

A typical example of the polyurethane-based thermoplastic elastomer to be used in the present invention is a polyurethane elastomer produced by subjecting a prepolymer having an isocyanate group at both ends to chain extension with a polyamine containing a diamine as the main component, wherein the prepolymer is produced by the reaction of a polyether and/or a polyester each having a number average molecular weight of 1000-6000 and having a hydroxyl group at an end with a polyisocyanate containing an organic isocyanate as the main component in the presence or absence of a conventional solvent (e.g., dimethylformamide, dimethylacetamide). The polyester and/or the polyether is preferably a polyalkylene diol having a number average molecular weight of about 1000-6000, preferably 1300-5000, such as a polybutylene adipate copolyester, polyethylene glycol, polypropylene glycol, polytetramethylene glycol, and a glycol constituted of an (ethylene oxide)-(propylene oxide) copolymer. As the polyisocyanate, a conventional known polyisocyanate can be used. For example, it is possible to use an isocyanate mainly constituted of diphenylmethane 4,4'-diisocyanate and add a conventional known triisocyanate or the like in a trace amount if required. The polyamine may be one mainly constituted of a known diamine such as ethylenediamine and 1,2-propylenediamine, and a trace amount of a triamine or a tetraamine may be used in combination if required. These polyurethane-based thermoplastic elastomers may be used singly or may be used in the form of a mixture of two or more of them.

From the standpoint of excellent compression durability, the content of soft segments in the polyurethane-based thermoplastic elastomer to be used in the present invention is preferably greater than or equal to 15 wt%, more preferably greater than or equal to 25 wt%, even more preferably greater than or equal to 30 wt%, most preferably greater than or equal to 40 wt%. From the standpoint of securing of hardness and excellent heat resistance/wear-and-tear resistance, the content is preferably less than or equal to 80 wt%, more preferably less than or equal to 70 wt%.

An example of the polyamide-based elastomer to be used in the present invention is one produced using a polyamide as the hard segment and a polyol as the soft segment and by copolymerizing these components. The polyamide that serves as the hard segment is at least one polyamide oligomer produced from a reaction product of a lactam compound with a dicarboxylic acid or a reaction product of a diamine with a dicarboxylic acid or the like. The polyol that serves as the soft segment is at least one compound selected from polyether polyol, polyester polyol, polycarbonate polyol and the like.

The lactam compound is at least one aliphatic lactam having 5-20 carbon atoms such as $\gamma$-butyrolactam, $\varepsilon$-caprolactam, $\omega$-heptalactam, $\omega$-undecalactam and $\omega$-lauryllactam.

The dicarboxylic acid is at least one dicarboxylic acid compound, such as an aliphatic dicarboxylic acid having 2-20 carbon atoms (e.g., oxalic acid, succinic acid, glutaric acid, adipic acid, pimelic acid, suberic acid, azelaic acid, sebacic acid, dodecanedioic acid), an alicyclic dicarboxylic acid (e.g., cyclohexanedicarboxylic acid), and an aromatic dicarboxylic acid (e.g., terephthalic acid, isophthalic acid, ortho-phthalic acid).

The diamine is at least one diamine selected from: an aliphatic diamine such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecanemethylenediamine, 2,2,4-trimethylhexamethylenediamine and 3-methylpentamethylenediamine; and an aromatic diamine such as meta-xylenediamine.

With respect to the polyol, the polyether polyol is at least one polyalkylene diol having a number average molecular weight of about 300-5000, such as polyethylene glycol, polypropylene glycol, polytetramethylene glycol, and a glycol constituted of a (ethylene oxide)-(propylene oxide) copolymer. An example of the polycarbonate diol is a reaction product of a low-molecular-weight diol with a carbonate compound which has a number average molecular weight of about 300-5000. The low-molecular-weight diol is at least one compound selected from: an aliphatic diol such as ethylene glycol, 1,2-propylene glycol, 1,3-propylene glycol, 1,4-butanediol, 1,5-pentanediol, 3-methyl-1,5-pentanediol, 1,6-hexanediol, 1,7-heptanediol, 1,8-octanediol, 1,9-nonanediol and 1,10-decanediol; and an alicyclic diol such as cyclohexanedimethanol and cyclohexanediol. The carbonate compound is at least one compound selected from a dialkyl carbonate, an alkylene carbonate and a diaryl carbonate. The polyester polyol is at least one polyester diol having a number average molecular weight of about 300-5000, such as polylactone.

The content of the soft segment in the polyamide-based thermoplastic elastomer to be used in the present invention is preferably greater than or equal to 5% by weight, more preferably greater than or equal to 10% by weight, even more preferably greater than or equal to 15% by weight, most preferably greater than or equal to 20% by weight from the standpoint of excellent compression durability, and is preferably less than or equal to 80% by weight, more preferably less than or equal to 70% by weight from the standpoint of securing of hardness and excellent heat resistance/wear-and-tear resistance.

The polymer that constitutes the net-like structure as the thermoplastic ethylene-(vinyl acetate) copolymer elastomer to be used in the present invention preferably has a vinyl acetate content of 1-35%. If the vinyl acetate content is too small, rubber elasticity may be deteriorated. Therefore, the vinyl acetate content is preferably greater than or equal to 1%, more preferably greater than or equal to 2%, even more preferably greater than or equal to 3%. If the vinyl acetate content is too large, rubber elasticity is excellent but the melting point may be decreased, resulting in poor heat resistance. Therefore, the vinyl acetate content is preferably less than or equal to 35%, more preferably less than or equal to 30%, even more preferably less than or equal to 26%.

In the thermoplastic ethylene-(vinyl acetate) copolymer elastomer, an $\alpha$-olefin having greater than or equal to 3 carbon atoms may be copolymerized. Examples of the $\alpha$-olefin having greater than or equal to 3 carbon atoms include propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Preferred are 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1 -nonadecene, and 1 -eicosene. Also, two or more kinds of them may be used.

The continuous linear body constituting the net-like structure of the present invention may be constituted of a mixture of at least two different kinds of thermoplastic elastomers. In the case where the continuous linear body is constituted of a mixture of at least two different kinds of thermoplastic elastomers, it is preferred that at least one thermoplastic elastomer selected from the group consisting of a polyester-based thermoplastic elastomer, a polyolefin-based thermoplastic elastomer, a polyurethane-based thermoplastic elastomer and a polyamide-based thermoplastic elastomer is contained in an amount of greater than or equal to 50% by weight, more preferably greater than or equal to 60% by weight, even more preferably greater than or equal to 70% by weight.

The thermoplastic elastomer for the continuous linear body constituting the net-like structure of the present invention may contain various additives depending on the intended purposes. As the additives, the followings can be added: phthalate ester-based, trimellitate ester-based, aliphatic acid-based, epoxy-based, adipate ester-based, polyester-based, and other plasticizers; known hindered phenol-based, sulfur-based, phosphorous-based, amine-based, and other antioxidants; hindered amine-based, triazole-based, benzophenone-based, benzoate-based, nickel-based, salicyl-based, and other light stabilizers; antistatic agents; molecular weight modifiers such as peroxides; compounds having a reactive group such as epoxy-based compounds, isocyanate-based compounds, and carbodiimide-based compounds; metal deactivators; organic and inorganic nucleating agents; neutralizers; antacids; antimicrobial agents; fluorescent whiteners; fillers; flame retardants; flame retardant auxiliaries; and organic and inorganic pigments.

The continuous linear body constituting the net-like structure of the present invention preferably has an endothermic peak at a temperature lower than or equal to the melting point of the thermoplastic elastomer constituting the continuous linear body in a melting curve measured with a differential scanning type calorimeter (DSC). The net-like structure constituted of continuous linear bodies each having an endothermic peak at a temperature lower than or equal to the melting point is improved in heat resistance/wear-and-tear resistance significantly compared with a net-like structure constituted of continuous linear bodies each having no endothermic peak. In order to further improve the heat resistance/wear-and-tear resistance of the net-like structure, it is also preferred to perform an annealing treatment at a temperature lower than the melting point of the thermoplastic elastomer constituting the continuous linear bodies by at least greater than or equal to 10°C after the heat melting adhesion of the continuous linear bodies. By performing the annealing after applying compression strain to the net-like structure, the heat resistance/wear-and-tear resistance can be further improved. The continuous linear bodies in the net-like structure that have undergone this treatment clearly show an endothermic peak at a temperature higher than or equal to 20°C and lower than or equal to the melting point in a melting curve measured with a differential scanning type calorimeter (DSC). If the annealing is not performed, no endothermic peak appears at a temperature higher than or equal to 20°C and lower than or equal to the melting point in the melting curve. From this fact, it is considered that, by annealing, the hard segments are rearranged to form quasi-crystallization-like crosslinking points, whereby the heat resistance/wear-and-tear resistance is improved. Hereinafter, this annealing treatment is also referred to as a "quasi-crystallization treatment". The quasi-crystallization treatment effect is effective for a polyester-based thermoplastic elastomer, as well as a polyolefin-based thermoplastic elastomer, a polyamide-based thermoplastic elastomer and a polyurethane-based thermoplastic elastomer.

The net-like structure of the present invention has all of three advantageous effects, i.e., soft touch upon use, a reduced bottom touch feeling and excellent compression durability. The method for producing a net-like structure having all of the above-mentioned advantageous effects is required the following matter: the net-like structure has, in a thickness direction thereof, a thin fiber main region that mainly includes thin fibers having a fiber size of greater than or equal to 0.1 mm and less than or equal to 1.5 mm, a thick fiber main region that mainly includes thick fibers having a fiber size of greater than or equal to 0.4 mm and less than or equal to 3.0 mm and a mixed region that is located between the thin fiber main region and the thick fiber main region and includes the thin fibers and the thick fibers in a mixed state, the fiber size of the thick fibers is greater than that of the thin fibers by greater than or equal to 0.07 mm, and the residual strain after 750 N constant load repeated compression at pressurization from the side of the thin fiber main region of the net-like structure is less than or equal to 15%.

In the thin fiber main region, the wording "mainly" means that the percentage of the number of thin fibers included in a region of interest is greater than or equal to 90% of the total number of fibers included in the region. In the thick fiber main region, the wording "mainly" means that the percentage of the number of thick fibers included in a region of interest is greater than or equal to 90% of the total number of fibers included in the region. In the mixed region including thin fibers and thick fibers in a mixed state and located between the thin fiber main region and the thick fiber main region, the percentage of the number of thin fibers included in a region of interest relative to the total number of fibers included in the region is smaller than that in the thin fiber main region, and the percentage of the number of thick fibers included in a region of interest relative to the total number of fibers included in the region is smaller than that in the thick fiber main region. That is, the mixed region means a region where both of the number of thin fibers and the number of thick fibers are each less than 90% of the total number of fibers included in the region.

The percentages of the numbers of fibers in a given region are measured in the following manner. First, a specimen is cut into a size of 3 cm wide × 3 cm long × specimen thickness to obtain 10 samples, and the weight of each sample is measured with an electronic balance. Thereafter, fibers constituting the specimen are extracted one by one from the same front face of the samples so that the sample thickness decreases as uniformly as possible. The work of extracting fibers one by one is continued until the sample weight first becomes less than or equal to 90% of the weight of the first-prepared sample. The cross sections of the extracted fibers are checked with naked eyes or with an optical microscope, etc., to separate thin fibers from thick fibers, and count the number of thin fibers and the number of thick fibers. In the case where the thin fibers are solid-section fibers each having a solid cross section and the thick fibers are hollow-section fibers each having a hollow cross section as mentioned below, fibers can be separated into thin fibers and thick fibers by checking the cross sections of the extracted fibers with naked eyes or with an optical microscope, etc. The numbers of thin fibers and the numbers of thick fibers in 10 samples are summed, to determine the value as the total number of fibers included in the region. From the number of thin fibers and the number of thick fibers relative to the total number of fibers included in the region, the percentages of the number of thin fibers and the number of thick fibers are respectively calculated, to determine whether the region is a thin fiber main region, a thick fiber main region, or a mixed region.

Subsequently, the work of extracting fibers from each sample is restarted, continuing the work of extracting fibers one by one until the sample weight first becomes less than or equal to 80% of the weight of the first-prepared sample, and, as in the manner described above, from the number of thin fibers and the number of thick fibers relative to the total number of fibers included in the region, the percentages of the number of thin fibers and the number of thick fibers are respectively calculated, to determine whether the region is a thin fiber main region, a thick fiber main region, or a mixed region.

Thereafter, the work of extracting fibers from each sample is repeated every about 10% of sample weight, i.e., until the sample weight first becomes less than or equal to 70% of the weight of the first-prepared sample, until the sample weight first becomes less than or equal to 60% of the weight of the first-prepared sample, until the sample weight first becomes less than or equal to 50% of the weight of the first-prepared sample, until the sample weight first becomes less than or equal to 40% of the weight of the first-prepared sample, until the sample weight first becomes less than or equal to 30% of the weight of the first-prepared sample, until the sample weight first becomes less than or equal to 20% of the weight of the first-prepared sample, until the sample weight first becomes less than or equal to 10% of the weight of the first-prepared sample, and further until the sample weight becomes 0%. As in the manner described above, from the number of thin fibers and the number of thick fibers relative to the total number of fibers included in each of 10 regions divided in the thickness direction from the front face, the percentages of the number of thin fibers and the number of thick fibers are respectively calculated, to determine whether each region is a thin fiber main region, a thick fiber main region, or a mixed region.

In the net-like structure of the present invention, the residual strain after 750 N constant load repeated compression at pressurization from the thin fiber main region side of the net-like structure (wherein the 750 N constant load repeated compression is also referred to as "750 N constant load repeated compression from the thin fiber main region", hereinafter) is less than or equal to 15%, preferably less than or equal to 13%, more preferably less than or equal to 11%, even more preferably less than or equal to 10%. In a net-like structure having such a multi-layer structure that a layer in which the continuous linear bodies mainly include thin fibers and a layer in which the continuous linear bodies mainly include thick fibers are laminated, the residual strain after 750 N constant load repeated compression from the side of the layer mainly including thin fibers (i.e., the thin fiber main region) is greater than that from the side of the layer mainly including thick fibers (i.e., the thick fiber main region). Therefore, the fact that the residual strain after 750 N constant load repeated compression from the thin fiber main region is small means that the compression durability of the entire net-like structure is high.

In order to reduce the residual strain after 750 N constant load repeated compression from the thin fiber main region, it is important to allow the presence of a mixed region including thin fibers and thick fibers in a mixed state at a position between the thin fiber main region and the thick fiber main region, so that these regions are integrated, not separated from one another, thereby forming the thickness of the entire net-like structure.

It is possible to produce a net-like structure having soft touch upon use and a reduced bottom touch feeling, even with a 2-stack layered net-like structure where a net-like structure mainly including thin fibers and a net-like structure mainly including thick fibers are merely stacked on each other without the presence of a mixed region including thin fibers and thick fibers in a mixed state, and these net-like structures can be easily separated and are not integrated. However, in such a stack layered net-like structure, when pressurizing compression is performed from the face of the net-like structure in which the continuous linear bodies are formed of thin fibers and which has a low compression hardness, only the net-like structure in which the continuous linear bodies are formed of thin fibers and which has a low compression hardness is first deformed by the compression, whereby only the net-like structure in which the continuous linear bodies are formed of thin fibers and which has a low compression hardness becomes deflected independently from the net-like structure in which the continuous linear bodies are formed of thick fibers and which has a high compression hardness. It is only at the stage when the net-like structure in which the continuous linear bodies are formed of thin fibers and which has a low compression hardness alone can no more stand the compression load that the compression stress propagates to the net-like structure in which the continuous linear bodies are formed of thick fibers and which has a high compression hardness, at which deformation and deflection of the net-like structure in which the continuous linear bodies are formed of thick fibers and which has a high compression hardness start. Therefore, when pressurizing compression is repeated, fatigue builds up first in the net-like structure in which the continuous linear bodies are formed of thin fibers and which has a low compression hardness, whereby reduction in thickness and reduction in compression hardness proceed faster than the net-like structure in which the continuous linear bodies are formed of thick fibers and which has a high compression hardness. That is, the entire net-like structure is poor in compression durability.

It is also possible to produce a net-like structure having soft touch upon use and a reduced bottom touch feeling, even with a 2-bond layered net-like structure where a net-like structure mainly including thin fibers and a net-like structure mainly including thick fibers are bonded together by adhesion without the presence of a mixed region including thin fibers and thick fibers in a mixed state. However, in such a bond layered net-like structure, while, at the initial stage of repeated compression, both of the net-like structures are deformed and deflected under pressurizing compression load in an integrated manner, stress is concentrated on the bonding plane as compression is repeated, causing reduction in adhesion force and coming off. Therefore, in this 2-bond layered net-like structure, also, the entire compression durability is poor.

It is also possible to produce a net-like structure having soft touch upon use and a reduced bottom touch feeling, even with a net-like structure where a thin fiber main region mainly including thin fibers and a thick fiber main region mainly including thick fibers are integrated by fusion without the presence of a mixed region including thin fibers and thick fibers in a mixed state. Such a net-like structure can be obtained by a method of stacking by fusion a net-like structure mainly including thin fibers by discharging thin fibers onto a net-like structure mainly including thick fibers. However, in the net-like structure obtained by this method, since thin fibers are fused after thick fibers have been solidified, the fusion bonding force on the boundary between the thick fiber layer and the thin fiber layer is low, whereby stress is concentrated on the boundary as compression load is repeatedly applied, causing interfacial peeling, resulting in deterioration in compression durability.

The net-like structure of the present invention has a mixed region including thin fibers and thick fibers in a mixed state and located between the thin fiber main region and the thick fiber main region, where these regions are integrated, not separated from one another, thereby forming the thickness of the entire net-like structure. With this structure, even when pressurizing compression is performed from the side of the thin fiber main region in which the continuous linear bodies mainly include thin fibers and which has a low compression hardness, stress propagates to the side of the thick fiber main region in which the continuous linear bodies mainly include thick fibers and which has a high compression hardness through the mixed region from the initial stage of compression. Stress is therefore dispersed effectively in the thickness direction, and the entire net-like structure deforms and deflects against pressurizing compression load. This has made it possible to reduce the residual strain after 750 N constant load repeated compression at pressurization from the thin fiber main region in which the continuous linear bodies mainly include thin fibers and which has a low compression hardness, and therefore the compression durability of the entire net-like structure is increased.

The net-like structure of the present invention is obtained by a known method as described in Japanese Patent Laying-Open No. 2014-194099, etc. modified with a new technology. For example, a thermoplastic elastomer is distributed to nozzle orifices from a multi-row nozzle that has a plurality of orifices having a plurality of different orifice hole sizes to be described later, and discharged downward from the nozzle at a spinning temperature higher than the melting point of the thermoplastic elastomer by a temperature greater than or equal to 20°C and less than 120°C. Continuous linear bodies are brought into contact with one another in a molten state and fused together to form a three-dimensional structure, which is simultaneously sandwiched by take-up conveyer nets, cooled with cooling water in a cooling bath, then drawn out, and drained or dried, to obtain a net-like structure with both faces or one face smoothed. When only one face is to be smoothed, the elastomer may be discharged onto an inclined take-up net, and continuous linear bodies may be brought into contact with one another in a molten state and fused together to form a three-dimensional structure, which may be simultaneously cooled while the form of only the take-up net face is relaxed. The obtained net-like structure can also be subjected to an annealing treatment. Note that a drying treatment of the net-like structure may be regarded as an annealing treatment.

As a means for obtaining the net-like structure of the present invention, it is preferred to optimize the nozzle shape and dimensions and the arrangement of nozzle holes. As for the nozzle shape, the orifice size for forming thin fibers is preferably less than or equal to 1.5 mm, and the orifice size for forming thick fibers is preferably greater than or equal to 2 mm. The nozzle orifice shape for forming thick fibers preferably has a hollow forming property. Examples of such nozzles include a C-type nozzle and a triple bridge shaped nozzle. From the standpoint of pressure resistance, a triple bridge shaped nozzle is preferable. The inter-hole pitch is preferably greater than or equal to 4 mm and less than or equal to 12 mm, more preferably greater than or equal to 5 mm and less than or equal to 11 mm, for both orifices for forming thin fibers and orifices for forming thick fibers. Examples of the arrangement of nozzle holes include lattice arrangement, circumferential arrangement, and zigzag arrangement. From the standpoint of the quality of the net-like structure, lattice arrangement or zigzag arrangement is preferable. The inter-hole pitch as used herein refers to the distance between the centers of nozzle holes, and has an inter-hole pitch in the width direction of the net-like structure (hereinafter referred to as a "width-direction inter-hole pitch") and an inter-hole pitch in the thickness direction of the net-like structure (hereinafter referred to as a "thickness-direction inter-hole pitch"). The preferable inter-hole pitch described above is an inter-hole pitch suitable for both the width-direction inter-hole pitch and the thickness-direction inter-hole pitch.

A nozzle for obtaining the net-like structure of the present invention is constituted of three groups (a group, ab mixed group, and b group), that is,

a group: an orifice hole group where orifice holes for thin fibers are arranged in a plurality of rows in the thickness direction,

ab mixed group: an orifice hole group where orifice holes for thin fibers and orifice holes for thick fibers are arranged in a mixed state in a plurality of rows in the thickness direction, and

b group: an orifice hole group where orifice holes for thick fibers are arranged in a plurality of rows in the thickness direction.

As another nozzle, there is a nozzle constituted of two groups ($\alpha$ group and $\beta$ group), that is,

$\alpha$ group: an orifice hole group where orifice holes for thin fibers are arranged in a plurality of rows in the thickness direction, and

$\beta$ group: an orifice hole group where orifice holes for thick fibers are arranged in a plurality of rows in the thickness direction, and the difference between the width-direction inter-hole pitch of orifices for thin fiber formation use and the width-direction inter-hole pitch of orifices for thick fiber formation use is small. From the standpoint that the structure of the nozzle can be simplified, the nozzle constituted of $\alpha$ group and $\beta$ group is more preferable.

Although the nozzle has only two orifice hole groups, fibers spun from near the boundary between $\alpha$ group and $\beta$ group form a mixed region having thin fibers and thick fibers in a mixed state. Therefore, the net-like structure of the present invention having three regions in the thickness direction can be obtained.

In order to obtain the net-like structure of the present invention which has excellent compression durability, it is necessary to reduce the difference between the width-direction inter-hole pitch of orifices for thin fiber formation use and the width-direction inter-hole pitch of orifices for thick fiber formation use. The reason why the difference in durability is small when the difference in width-direction inter-hole pitch is small has not been clarified completely, but is presumed as follows.

Being small in the difference in the width-direction inter-hole pitch of orifices in the mixed region including thin fibers and thick fibers in a mixed state means that the numbers of constituent thin fibers and thick fibers in the mixed region are close to each other. When the numbers of constituent thin fibers and thick fibers are close to each other, it is indicative that thin fibers and thick fibers constitute a plurality of contact points in a roughly one-to-one relationship. Therefore, it is considered that stress easily propagates when pressure is applied from the side in which the continuous linear bodies are mainly formed of thin fibers (the thin fiber main region side), whereby the compression durability becomes good.

On the contrary, the case is considered where a net-like structure is formed using a nozzle large in the difference in the width-direction inter-hole pitch of orifices. When the number of constituent thin fibers is large compared with the number of constituent thick fibers in the mixed region including thin fibers and thick fibers in a mixed state, some of the thin fibers hardly have contact points with thick fibers in the mixed region. Therefore, it is considered that, at pressurization from the side in which the continuous linear bodies are mainly formed of thick fibers (the thick fiber main region side), there are thin fibers to which stress hardly propagate from thick fibers, and such thin fibers receive stress via other thin fibers to which stress has propagated from thick fibers. Conversely, it is considered that, at pressurization from the side in which the continuous linear bodies are mainly formed of thin fibers (the thin fiber main region side), there are thin fibers that cannot propagate stress to thick fibers, and such thin fibers propagate stress to thick fibers via other thin fibers that can propagate stress to thick fibers.

In other words, it is considered that, when a net-like structure is formed using a nozzle large in the difference in the width-direction inter-hole pitch of orifices, the propagation of stress is dispersed in the thickness direction and directions orthogonal to the thickness direction in the mixed region including thin fibers and thick fibers in a mixed state, reducing the stress propagation efficiency, and thus the difference in compression durability is large between the case of pressurization from the side in which the continuous linear bodies are mainly formed of thin fibers (the thin fiber main region side) and the case of pressurization from the side in which the continuous linear bodies are mainly formed of thick fibers (the thick fiber main region side). Therefore, the net-like structure becomes poor in compression durability when pressure is applied from the thin fiber main region side.

The difference between the width-direction inter-hole pitch of orifices for thin fiber formation use and the width-direction inter-hole pitch of orifices for thick fiber formation use is preferably less than or equal to 2 mm, more preferably less than or equal to 1 mm, even more preferably 0 mm, in which, namely, the width-direction inter-hole pitches are the same.

The fiber size (average fiber size: this also applies to description below) of the thin fibers mainly constituting the thin fiber main region in the net-like structure of the present invention is greater than or equal to 0.1 mm and less than or equal to 1.5 mm, preferably greater than or equal to 0.2 mm and less than or equal to 1.4 mm, more preferably greater than or equal to 0.3 mm and less than or equal to 1.3 mm. If the fiber size is less than 0.1 mm, the continuous linear bodies will be so fine that, while compactness and soft touch will be good, it will be difficult to secure the hardness required for the net-like structure. If the fiber size exceeds 1.5 mm, it will be difficult to produce soft touch.

The fiber size (average fiber size: this also applies to description below) of the thick fibers mainly constituting the thick fiber main region in the net-like structure of the present invention is greater than or equal to 0.4 mm and less than or equal to 3.0 mm, preferably greater than or equal to 0.5 mm and less than or equal to 2.5 mm, more preferably greater than or equal to 0.6 mm and less than or equal to 2.0 mm. If the fiber size is less than 0.4 mm, the continuous linear bodies will be so fine that, it will be difficult to secure the hardness required for the net-like structure. If the fiber size exceeds 3.0 mm, while the hardness of the net-like structure is secured, the net-like structure will become course and the compression durability will be deteriorated.

With respect to the fiber sizes of the thin fibers and the thick fibers in the continuous linear bodies constituting the net-like structure of the present invention, the fiber size of the thick fibers is greater than that of the thin fibers by greater than or equal to 0.07 mm, preferably greater than or equal to 0.10 mm, more preferably greater than or equal to 0.12 mm, even more preferably greater than or equal to 0.15 mm, especially preferably greater than or equal to 0.20 mm, most preferably greater than or equal to 0.25 mm. In the present invention, the upper limit of the difference in fiber size between the thick fibers and the thin fibers is preferably less than or equal to 2.5 mm. If the fiber size of the thick fibers is greater than that of the thin fibers by less than 0.07 mm, the net-like structure will have a bottom touch feeling. If the difference in fiber size is too large, there will be an excessive feeling of strangeness. It is therefore necessary to set the difference in fiber size within a proper range.

The total weight ratio of thin fibers constituting the net-like structure of the present invention is preferably greater than or equal to 10% and less than or equal to 90% of the total weight of all fibers constituting the net-like structure. In order to impart soft touch to the net-like structure of the present invention, the ratio is more preferably greater than or equal to 20% and less than or equal to 80%, even more preferably greater than or equal to 30% and less than or equal to 70%. If the ratio is less than 10% or exceeds 90%, it will be impossible to impart soft touch to the net-like structure.

In the net-like structure of the present invention, the thin fibers are solid-section fibers each having a solid cross section and the thick fibers are hollow-section fibers each having a hollow cross section. This is because that thinner fibers can be produced when solid-section fibers are used, and that the weight of the net-like structure can be reduced when the thick fibers are hollow-section fibers. The solid-section fibers and the hollow-section fibers can be distinguished from each other by the observation of the fibers with naked eyes or with an optical microscope, etc.

The continuous linear bodies constituting the net-like structure of the present invention may be combined with another thermoplastic resin to form complex linear bodies within the bounds of not impairing the object of the present invention. When the linear bodies themselves are complexed, examples of the complex form include complex linear bodies of a sheath core type, a side-by-side type, and an eccentric sheath core type.

The cross-sectional shape of the continuous linear bodies constituting the net-like structure of the present invention is preferably roughly circular. In some cases, however, compression resistance and touch can be imparted by providing an abnormal cross section.

In the continuous linear bodies constituting the net-like structure of the present invention, a chemical having a function such as antibacterial deodorization, deodorization, mold prevention, coloring, flavoring, flame resisting, and absorption and desorption of moisture, may be added to the thermoplastic elastomer constituting the continuous linear bodies and/or may be adhered onto the surfaces of the continuous linear bodies by a treatment such as addition, as long as the performance of the continuous linear bodies cannot be deteriorated.

The net-like structure of the present invention includes structures formed into any shape. For example, included are net-like structures having shapes of a plate, a triangle pole, a polyhedron, a cylinder, and a sphere and a shape including many of these shapes. Such structures can be formed by a known method such as cutting, hot pressing, and processing of nonwoven fabric.

The net-like structure of the present invention contains, in at least a portion thereof, a net-like structure having the thin fiber main region, the thick fiber main region and the mixed region located between the thin fiber main region and the thick fiber main region. That is, in the net-like structure of the present invention, each of the thin fiber main region, the mixed region and the thick fiber main region may be contained singly or multiple pieces of at least one of these regions may be contained. For example, the net-like structure of the present invention preferably includes, within the scope thereof, a net-like structure having a thin fiber main region, a mixed region, a thick fiber main region, a mixed region and a thin fiber main region in the thickness direction, a net-like structure having a thin fiber main region, a mixed region, a thick fiber main region, a mixed region, a thin fiber main region, a mixed region and a thick fiber main region in the thickness direction, etc. In a net-like structure in which at least one of the thin fiber main region and the thick fiber main region is contained in multiple pieces, it is preferred that a mixed region is present between each of the thin fiber main regions and the thick fiber main regions from the standpoint of imparting a reduced bottom touch feeling and excellent compression durability while keeping soft touch upon use. Moreover, in the net-like structure of the present invention, from the standpoint of imparting soft touch, it is required that at least one surface side is a thin fiber main region side, and it is also possible that both of the surface sides are thin fiber main region sides.

The apparent density of the net-like structure of the present invention is preferably greater than or equal to 0.005 g/cm$^3$ and less than or equal to 0.20 g/cm$^3$, more preferably greater than or equal to 0.01 g/cm$^3$ and less than or equal to 0.18 g/cm$^3$, even more preferably greater than or equal to 0.02 g/cm$^3$ and less than or equal to 0.15 g/cm$^3$. If the apparent density is less than 0.005 g/cm$^3$, the required hardness cannot be secured when the net-like structure is used as a cushion material. If the apparent density exceeds 0.20 g/cm$^3$, the net-like structure may be too hard to be suitable for a cushion material.

The thickness of the net-like structure of the present invention is preferably greater than or equal to 5 mm, more preferably greater than or equal to 10 mm. If the thickness is less than 5 mm, the net-like structure will be so thin for use as a cushion material that a bottom touch feeling may occur. The upper limit of the thickness is preferably less than or equal to 300 mm, more preferably less than or equal to 200 mm, even more preferably less than or equal to 120 mm from the standpoint of manufacturing equipment.

In the net-like structure of the present invention, the hardness at 25% compression (also referred to as the "25% compression hardness", hereinafter) at pressurization from the thin fiber main region side (in a case where both surface sides are thin fiber main region sides, the side of a surface of a thin fiber main region formed of thinner fibers) is preferably greater than or equal to 6 N/$\phi$100 mm, more preferably greater than or equal to 10 N/$\phi$100 mm, even more preferably greater than or equal to 20 N/$\phi$100 mm. If the 25% compression hardness is less than 6 N/$\phi$100 mm, the hardness as a cushion material will be insufficient, and a bottom touch feeling may occur. The upper limit of the 25% compression hardness is not particularly specified, but is preferably less than or equal to 1.5 kN/$\phi$100 mm.

In the net-like structure of the present invention, the hardness at 40% compression (also referred to as the "40% compression hardness", hereinafter) at pressurization from the thin fiber main region side (in a case where both surface sides are thin fiber main region sides, the side of a surface of a thin fiber main region formed of thinner fibers)is preferably greater than or equal to 15 N/$\phi$100 mm, more preferably greater than or equal to 20 N/$\phi$100 mm, even more preferably greater than or equal to 30 N/$\phi$100 mm, especially preferably greater than or equal to 40 N/$\phi$100 mm. If the 40% compression hardness is less than 15 N/$\phi$100 mm, the hardness as a cushion material will be insufficient, and a bottom touch feeling may occur. The upper limit of the 40% compression hardness is not particularly specified, but is preferably less than or equal to 5 kN/$\phi$100 mm.

In the net-like structure of the present invention, the hysteresis losses at pressurization from the thin fiber main region side (in a case where both surface sides are thin fiber main region sides, the side of a surface of a thin fiber main region formed of thinner fibers) is preferably less than or equal to 60%, more preferably less than or equal to 50%, even more preferably particularly preferably 40%, especially preferably less than or equal to 30%, most preferably particularly preferably 25%. If the hysteresis loss exceeds 60%, resilience of the net-like structure of the present invention will become too poor, resulting in deterioration in comfort to sleep on and comfort to sit on. The lower limit of the hysteresis loss is not particularly specified, but is preferably greater than or equal to 1% in the present invention.

According to the present invention, the residual strain after 750 N constant load repeated compression, the 25% and 40% compression hardness, and the hysteresis losses at pressurization from the thin fiber main region side (in a case where both surface sides are thin fiber main region sides, the side of a surface of a thin fiber main region formed of thinner fibers) can be measured using a universal tester such as Instron universal tester manufactured by Instron Japan Co., Ltd., precision universal tester Autograph AG-X plus manufactured by SHIMAZDU CORPORATION, and TENSILON universal tester manufactured by Orientec Co., Ltd.

The cushion material according to the present invention includes the above net-like structure inside the cushion. Because the cushion material of the present invention includes the above net-like structure inside the cushion, the cushion material has a reduced bottom touch feeling and excellent compression durability while keeping soft touch upon use.

EXAMPLES

While the present invention will be described hereinafter concretely with reference to examples, the present invention is not limited to these examples. Measurement and evaluation of property values in examples were performed in the following manners. Note that, while the sizes of specimens described below were considered standard, a possible specimen size was used for measurement when the quantity of specimens was insufficient.

(1) Fiber Size (mm)

A specimen was cut into a size of 10 cm wide × 10 cm long × specimen thickness, and 10 fiber linear bodies were collected randomly by a length of about 5 mm from each of a thin fiber main region and a thick fiber main region in the thickness direction from the cut cross section (no linear bodies was collected from a mixed region; in the case where there were multiple thin fiber main regions and/or multiple thick fiber main regions, 10 linear bodies were collected from each of the regions). The collected linear bodies were cut in a round-slicing direction, and placed on cover glass in a standing state along the fiber axis, to obtain a fiber cross-sectional picture in the round-slicing direction with an optical microscope having an appropriate magnification. The sizes of fibers constituting each of the regions were determined from the obtained fiber cross sectional picture and were employed as the fiber sizes of the fibers, and the average of the fiber sizes in each of the regions was calculated (unit: mm) (average value of n = 10 each). That is, the fiber sizes of the thin fibers and the thick fibers respectively mean the average fiber sizes of the thin fibers and the thick fibers. In the case where there were multiple thin fiber main regions and/or multiple thick fiber main regions and therefore there were multiple average values of the fiber sizes of the thin fibers and/or multiple average values of the fiber sizes of the thick fibers, an average value of fiber sizes in the main area of each of the regions was determined. As for the measurement of the fiber size in Comparative Example 2, 10 fiber linear bodies were collected by a length of about 5 mm randomly in the thickness direction from the cut cross section, then cross sectional pictures of the collected linear bodies were obtained with an optical microscope with an appropriate magnification, and the fiber sizes were determined from the obtained fiber cross sectional pictures in the same manner as mentioned above Since the surface of the net-like structure is made flat to obtain smoothness, the fiber cross section may be deformed. For this reason, it was decided not to collect a specimen in a region within 2 mm from the surface of the net-like structure. In the case where the cross sectional shape of each of the linear bodies was a hollow cross sectional shape or a modified cross sectional shape, the outer peripheral length of the cross sectional shape of each of the linear bodies was measured from the obtained fiber cross sectional picture, and the diameter of a circle having the same outer peripheral length as the above-mentioned outer peripheral length was determined by calculation, and the obtained length was employed as the fiber size.

(2) Difference in Fiber Size (mm)

The difference between the averages of the fiber sizes of the thin fibers and the thick fibers measured in (1) above was determined, to calculate the difference in fiber size according to the formula below.

$$(\text{Difference in fiber size}) = (\text{Average of fiber sizes of thick fibers}) - (\text{Average of fiber sizes of thin fibers}) \quad (\text{unit: mm})$$

That is, the difference in fiber size between thin fibers and thick fibers means the difference between the average fiber size of thin fibers and the average fiber size of thick fibers. In the case where there were multiple thin fiber main regions and/or multiple thick fiber main regions and therefore there were multiple average values of the fiber sizes of thick fibers and/or multiple average values of the fiber sizes of thin fibers, a largest (average value of the fiber sizes of the thick fibers) was employed as the (average value of the fiber sizes of the thick fibers) in the formula, and a smallest (average value of the fiber sizes of the thin fibers) was employed as the (average value of the fiber sizes of the thin fibers).

(3) Total Weight Ratio of Thin fibers (%)

A specimen was cut into a size of 5 cm wide × 5 cm long × specimen thickness. Fibers constituting the specimen were checked visually or with an optical microscope, etc. and sorted into thin fibers and thick fibers. Thereafter, the total weight of only the thin fibers and the total weight of only the thick fibers were measured. The total weight ratio of the thin fibers was calculated according to the formula below.

$$\text{(Total weight ratio of thin fibers)} = \text{(Total weight of thin fibers)}/\text{(Total weight}$$

$$\text{of thin fibers + Total weight of thick fibers)} \times 100 \quad \text{(unit: \%)}$$

(4) Hollowness (%)

A specimen was cut into a size of 5 cm wide × 5 cm long × specimen thickness, and 10 linear bodies of hollow cross section fibers were collected randomly in the thickness direction from a cut cross section in a region of the specimen except for the ranges within 10% from both faces of the specimen in the thickness direction. The collected linear bodies were cut in a round-slicing direction, and placed on cover glass in a standing state along the fiber axis, to obtain a fiber cross-sectional picture in the round-slicing direction with an optical microscope. From the cross-sectional picture, a hollow part area (a) and the total area (b) of the fiber including the hollow part were determined, to calculate the hollowness according to the formula below.

$$\text{(Hollowness)} = \text{(a)}/\text{(b)} \times 100 \quad \text{(unit: \%, average of n = 10)}$$

(5) Thickness and Apparent Density (mm and g/cm$^3$)

A specimen was cut into 4 samples each having a size of 10 cm wide × 10 cm long × specimen thickness, and the samples were left standing with no load for 24 hours. Thereafter, the height at one point of each sample was measured, with the side of thin fibers facing up, using a circular probe having an area of 15 cm$^2$ with a thickness gauge Model FD-80N manufactured by Kobunshi Keiki Co., Ltd., to determine the average of the 4 samples as the thickness. The weight was also measured by placing the specimen on an electronic balance, to determine the average of the weights of the 4 samples as the weight. The apparent density was calculated from the weight and the thickness according to the formula below.

$$\text{(Apparent density)} = \text{(Weight)}/\text{(Thickness} \times 10 \times 10) \quad \text{(unit: g/cm}^3)$$

(6) Melting Point (Tm) (°C)

An endothermic peak (melting peak) temperature was determined from an endothermic/exothermic curve measured at a temperature rise rate of 20°C/min using a differential scanning calorimeter Q200 manufactured by TA Instruments.

(7) Residual Strain after 750 N Constant Load Repeated Compression (%)

A specimen was cut into a size of 40 cm wide × 40 cm long × specimen thickness, and the cut sample was left standing with no load for 24 hours under an environment of 23°C ± 2°C, and then measured using a universal tester (Instron universal tester manufactured by Instron Japan Co., Ltd.) that was under an environment of 23°C ± 2°C. The sample was placed in the tester so as to be in the center with respect to a pressure plate having a diameter of 200 mm and a thickness of 3 mm, and the thickness at the time when a load of 5 N was detected by the universal tester was measured as an initial hardness meter thickness (c) while employing the thin fiber main region (wherein the thin fiber main region refers to a thin fiber main region mainly constituted of the thinnest fibers in the case where there were multiple thin fiber main regions, hereinafter) side as the pressure plate side. Thereafter, the thickness-measured sample was subjected to 750 N constant load repeated compression using ASKER STM-536 in conformity with JIS K6400-4 (2004) A Method (Constant Load Method). As the pressure plate, used was one having a shape of a circle having a diameter of 250 ± 1 mm and a thickness of 3 mm, with a radius of curvature of 25 ± 1 mm at an edge portion of the bottom face and having a flat lower face. The load was 750 N ± 20 N, the compression frequency was 70 ± 5 times per minute, the number of times of repeated compression was 80,000, the percentage of the time during which the sample was pressurized at the maximum 750 ± 20 N was less than or equal to 25% of the time required for repeated compression. After termination of the repeated compression, the test piece was left standing in a non-pressurized state for 10 ± 0.5 minutes. Using a universal tester (Instron universal tester manufactured by Instron Japan Co., Ltd.), the sample was placed in the tester so as to be in the center with respect to a pressure plate having a diameter of 200 mm and a thickness of 3 mm, and the thickness at the time when a load of 5 N was detected by the universal tester was measured as a hardness meter thickness (d) after repeated compression. The residual strain after 750 N constant load repeated compression at pressurization from the thin fiber main region side was calculated using the initial hardness meter thickness (c) and the hardness meter thickness (d) after repeated compression according to the formula below.

$$\text{(Residual strain after 750 N constant load repeated compression)}$$

$$= \{(c) - (d)\}/(c) \times 100 \quad \text{(unit: \%, average of n = 3)}$$

(8) 25% and 40% Compression Hardness (N/$\phi$100 mm)

A specimen was cut into a size of 20 cm wide $\times$ 20 cm long $\times$ specimen thickness, and was left standing with no load for 24 hours under an environment of 23°C $\pm$ 2°C. The specimen was then placed in a universal tester (Instron universal tester manufactured by Instron Japan Co., Ltd.) that was under an environment of 23°C $\pm$ 2°C so as to be in the center with respect to a pressure plate while employing the thin fiber main region (wherein the thin fiber main region refers to a thin fiber main region mainly constituted of the thinnest fibers in the case where there were multiple thin fiber main regions, hereinafter) side as the pressure plate side. Then compression was started for the center of the specimen at a speed of 1 mm/min using a pressure plate having a diameter of $\phi$100 mm, a thickness of 25 $\pm$ 1 mm, and a radius of curvature of 10 $\pm$ 1 mm at an edge portion of the bottom face and having a flat lower face. The thickness at the time when the universal tester detected a load of 0.4 N was measured as a hardness meter thickness. Taking the position of the pressure plate at this time as a zero point, the specimen was compressed to 75% of the hardness meter thickness at a speed of 10 mm/min, and then the pressure plate was immediately returned to the zero point at a speed of 10 mm/min. Subsequently, the specimen was compressed to 25% and 40% of the hardness meter thickness at a speed of 10 mm/min, and the loads at these times were measured as a 25% compression hardness and a 40% compression hardness, respectively (unit: N/$\phi$100 mm, average of n = 3), at pressurization from the thin fiber main region side.

(9) Hysteresis Loss (%)

A specimen was cut into a size of 20 cm wide $\times$ 20 cm long $\times$ specimen thickness, and was left standing with no load for 24 hours under an environment of 23°C + 2°C. The specimen was then placed in a universal tester (Instron universal tester manufactured by Instron Japan Co., Ltd.) that was under an environment of 23°C $\pm$ 2°C so as to be in the center with respect to a pressure plate while employing the thin fiber main region (wherein the thin fiber main region refers to a thin fiber main region mainly constituted of the thinnest fibers in the case where there were multiple thin fiber main regions, hereinafter) side as the pressure plate side. Then compression was started for the center of the specimen at a speed of 1 mm/min using a pressure plate having a diameter of $\phi$100 mm, a thickness of 25 $\pm$ 1 mm, and a radius of curvature of 10 $\pm$ 1 mm at an edge portion of the bottom face and having a flat lower face. The thickness at the time when the universal tester detected a load of 0.4 N was measured as a hardness meter thickness. Taking the position of the pressure plate at this time as a zero point, the specimen was compressed to 75% of the hardness meter thickness at a speed of 10 mm/min, and then the pressure plate was immediately returned to the zero point at a speed of 10 mm/min (a first stress-strain curve). When the pressure plate was returned to the zero point, the specimen was compressed again to 75% of the hardness meter thickness at a speed of 10 mm/min, and then the pressure plate was immediately returned to the zero point at the same speed (a second stress-strain curve).

In the second stress-strain curve in shown Fig. 1A, using a compression energy (WC) indicated by a stress-strain curve at second compression in Fig. 1B and a compression energy (WC') indicated by a stress-strain curve at second decompression in Fig. 1C, a hysteresis loss at pressurization from the thin fiber main region (wherein the thin fiber main region refers to a thin fiber main region mainly constituted of the thinnest fibers in the case where there were multiple thin fiber main regions, hereinafter) side was determined according to the formula below.

$$\text{(Hysteresis loss)} = (WC - WC')/WC \times 100 \quad \text{(unit: \%)}$$

WC = $\int$PdT (workload at compression from 0% to 75%)
WC' = $\int$PdT (workload at decompression from 75% to 0%)

As a simplified way, when stress-strain curves as shown in Figs. 1A-1C, for example, are obtained, the hysteresis loss can be calculated by data analysis using a personal computer. As another way, with the area of the hatched portion being defined as WC and the area of the dotted portion as WC', the difference between these areas can be determined from the weight of the cut-out portion (average of n = 3).

(10) Bottom Touch Feeling

A specimen was cut into a size of 40 cm wide × 40 cm long × specimen thickness, and then each of 30 panelists having body weights ranging from 40 to 100 kg (20- to 39-old male persons; n = 5, 20- to 39-old female persons; n = 5, 40- to 59-old male persons; n = 5, 40- to 59-old female persons; N = 5, 60- to 80-old male persons; n = 5, and 60- to 80-old female persons; n = 5) was allowed to sit on a chair having the specimen placed thereon. The degree of the "thud" feeling upon the sitting down on the seat face of the chair from the thin fiber main region (wherein the thin fiber main region refers to a thin fiber main region mainly constituted of the thinnest fibers in the case where there were multiple thin fiber main regions, hereinafter) side was evaluated qualitatively. The evaluation criteria were as follows: A: no thud feeling; B: weak thud feeling; C: moderate thud feeling; and D: strong thud feeling.

[Example 1]

As a polyester-based thermoplastic elastomer, dimethyl terephthalate (DMT) and 1,4-butanediol (1,4-BD) were put together with a small amount of a catalyst, and, after ester exchange by a usual way, subjected to polycondensation with addition of polytetramethylene glycol (PTMG) having a number average molecular weight of 1000 while temperature rise and pressure reduction were being performed, to produce a polyether-ester block copolymerized elastomer. Thereafter, with addition of 1% of an antioxidant, the resultant elastomer was mixed and kneaded, then pelletized, and dried in a vacuum at 50°C for 48 hours, to obtain a polyester-based thermoplastic elastomer (A-1), which had a soft segment content of 40 wt% and a melting point of 198°C.

As a nozzle, used was one having a nozzle effective face having lengths of 50 cm in the width direction and 67.6 mm in the thickness direction, on which triple bridge hollow forming orifices for thick fiber formation use having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices for thin fiber formation use having an outer size of 1 mm were zigzag-arranged in the eighth to fourteenth rows in the thickness direction at a width-direction inter-hole pitch of 6 mm and a thickness-direction inter-hole pitch of 5.2 mm. The obtained polyester-based thermoplastic elastomer (A-1) was discharged downward from the nozzle at a spinning temperature (melting temperature) of 240°C at a single-hole discharge rate of 1.4 g/min for hollow forming orifice holes and a single-hole discharge rate of 0.8 g/min for solid forming orifice holes. Cooling water was provided at a position 26 cm below the nozzle face. Endless nets made of stainless steel each having a width of 60 cm were placed in parallel at a spacing of 52 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having a thin fiber main region mainly including solid-section fibers each having a fiber size of 0.48 mm, a thick fiber main region mainly including hollow-section fibers each having a fiber size of 0.73 mm, a triangular rice-ball shaped cross section and a hollowness of 20%, and a mixed region including thin fibers and thick fibers in a mixed state and located between the thin fiber main region and the thick fiber main region, where these regions were integrated, not separated from one another. In this net-like structure, the difference in fiber size was 0.25 mm, the total weight ratio of the thin fibers was 35%, the apparent density was 0.050 g/cm$^3$, and the thickness of flattened surface portion was 50 mm.

In the obtained net-like structure, the residual strain after 750 N constant load repeated compression was 7.0%, the 25% compression hardness was 28.9 N/φ100 mm, the 40% compression hardness was 55.7 N/φ100 mm and the hysteresis loss was 26.7% at pressurization from the thin fiber main region side, and no bottom touch feeling was felt by panelists and therefore the evaluation on a bottom touch feeling was rated "A". The results are summarized in Table 1.

[Table 1]

| | | | Example 1 | Example 2 | Example 3 | Example 4 | Example 5 | Example 6 | Comparative Example 1 | Comparative Example 2 |
|---|---|---|---|---|---|---|---|---|---|---|
| Thermoplastic elastomer | | | (A-1) | (A-1) | (A-1) | (B-1) | (B-1) | (B-2) | (A-1) | (A-1) |
| Spinning temperature | (°C) | | 240 | 240 | 240 | 240 | 240 | 230 | 240 | 240 |
| Shape of fiber cross section | Thin fiber | | Solid cross section | Solid cross section | Solid cross section | Solid cross section | Solid cross section | Solid cross section | Solid cross section | Solid cross section |
| | Thick fiber | | Hollow cross section | Hollow cross section | Hollow cross section | Hollow cross section | Hollow cross section | Hollow cross section | Hollow cross section | Hollow cross section |
| Single-hole discharge rate | Hole for thin fibers | (g/min) | 0.8 | 1.0 | 0.9 | 1.1 | 1.1 | 0.8 | 0.5 | 0.9 |
| | Hole for thick fibers | (g/min) | 1.4 | 1.2 | 1.5 | 1.8 | 1.8 | 1.3 | 2.0 | 1.5 |
| Nozzle face-cooling water distance | (cm) | | 26 | 28 | 28 | 30 | 30 | 32 | 18 | 28 |
| Take-up speed | (m/min) | | 1.14 | 1.14 | 1.54 | 1.43 | 1.84 | 1.49 | 1.00 | 1.14 |
| Fiber size | Thin fibers (average) | (mm) | 0.48 | 0.63 | 0.50 | 0.52 | 0.57 | 0.49 | 0.32 | 0.50 |
| | Thick fibers (average) | (mm) | 0.73 | 0.70 | 0.70 | 1.13 | 1.14 | 0.88 | 0.80 | 0.76 |
| | Difference in fiber size | (mm) | 0.25 | 0.07 | 0.20 | 0.61 | 0.57 | 0.39 | 0.48 | 0.26 |
| Hollowness of thick fibers | (%) | | 20 | 18 | 20 | 30 | 29 | 33 | 28 | 20 |
| Total weight ratio of thin fibers | (%) | | 35 | 45 | 40 | 37 | 37 | 38 | 27 | - |
| Apparent density | (g/cm³) | | 0.050 | 0.046 | 0.040 | 0.043 | 0.052 | 0.033 | 0.046 | 0.051 [*1] |
| Thickness | (mm) | | 50 | 50 | 51 | 45 | 32 | 56 | 50 | 50 [*1] |
| Residual strain after 750 N constant load repeated compression | (%) | | 7.0 | 7.2 | 7.1 | 13.5 | 13.9 | 14.9 | 15.6 | 17.3 |
| 25% compression hardness | (N/φ100 mm) | | 28.9 | 39.4 | 18.0 | 6.2 | 6.5 | 17.3 | 21.9 | 32.1 |
| 40% compression hardness | (N/φ100 mm) | | 55.7 | 68.4 | 35.7 | 19.1 | 16.8 | 36.8 | 40.3 | 61.3 |
| Hysteresis loss | (%) | | 26.7 | 23.1 | 26.0 | 44.8 | 47.2 | 43.4 | 23.8 | 26.2 |
| Bottom touch feeling | - | | A | A | A | A | A | A | A | A |

*1: Value in the state of stacking of 2 net-like structures

As shown in Table 1, in the net-like structure obtained in this example, the fiber size of each of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/φ100 mm and the 40% compression hardness was greater than or equal to 15 N/φ100 mm at pressurization from the thin fiber main region side. Therefore, no bottom touch feeling was felt by the panelists in the qualitative evaluation. In the net-

16

like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.

[Example 2]

As a nozzle, used was one having a nozzle effective face having lengths of 50 cm in the width direction and 67.6 mm in the thickness direction, on which triple bridge hollow forming orifices for thick fiber formation use having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices for thin fiber formation use having an outer size of 1.2 mm were zigzag-arranged in the eighth to thirteenth rows in the thickness direction at a width-direction inter-hole pitch of 7 mm and a thickness-direction inter-hole pitch of 6.1 mm. The obtained polyester-based thermoplastic elastomer (A-1) was discharged downward from the nozzle at a spinning temperature (melting temperature) of 240°C at a single-hole discharge rate of 1.2 g/min for hollow forming orifice holes and a single-hole discharge rate of 1.0 g/min for solid forming orifice holes. Cooling water was provided at a position 28 cm below the nozzle face. Endless nets made of stainless steel each having a width of 60 cm were placed in parallel at a spacing of 52 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having a thin fiber main region mainly including solid-section fibers each having a fiber size of 0.63 mm, a thick fiber main region mainly including hollow-section fibers each having a fiber size of 0.70 mm, a triangular rice-ball shaped cross section and a hollowness of 18%, and a mixed region including thin fibers and thick fibers in a mixed state and located between the thin fiber main region and the thick fiber main region, where these regions were integrated, not separated from one another. In this net-like structure, the difference in fiber size was 0.07 mm, the total weight ratio of the thin fibers was 45%, the apparent density was 0.046 g/cm$^3$, and the thickness of flattened surface portion was 50 mm.

In the obtained net-like structure, the residual strain after 750 N constant load repeated compression was 7.2%, the 25% compression hardness was 39.4 N/$\phi$100 mm, the 40% compression hardness was 68.4 N/$\phi$100 mm and the hysteresis loss was 23.1% at pressurization from the thin fiber main region side, and no bottom touch feeling was felt by panelists and therefore the evaluation on a bottom touch feeling was rated "A". The results are summarized in Table 1.

As shown in Table 1, in the net-like structure obtained in this example, the fiber size of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/$\phi$100 mm and the 40% compression hardness was greater than or equal to 15 N/$\phi$100 mm at pressurization from the thin fiber main region side. Therefore, no bottom touch feeling was felt by the panelists in the qualitative evaluation. In the net-like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.

[Example 3]

As a nozzle, used was one having a nozzle effective face having lengths of 50 cm in the width direction and 72.7 mm in the thickness direction, on which solid forming orifices for thin fiber formation use having an outer size of 1 mm were zigzag-arranged in the first to fourth rows in the thickness direction at a width-direction inter-hole pitch of 6 mm and a thickness-direction inter-hole pitch of 5.2 mm, triple bridge hollow forming orifices for thick fiber formation use having an outer size of 3 mm and an inner size of 2.6 mm were zigzag-arranged in the fifth to eleventh rows in the thickness direction at a width-direction inter-hole pitch of 6 mm and a thickness-direction inter-hole pitch of 5.2 mm and solid forming orifices for thin fiber formation use having an outer size of 1 mm were zigzag-arranged in the twelfth to fifteenth rows in the thickness direction at a width-direction inter-hole pitch of 6 mm and a thickness-direction inter-hole pitch of 5.2 mm. The obtained polyester-based thermoplastic elastomer (A-1) was discharged downward from the nozzle at a spinning temperature (melting temperature) of 240°C at a single-hole discharge rate of 1.5 g/min for hollow forming orifice holes and a single-hole discharge rate of 0.9 g/min for solid forming orifice holes. Cooling water was provided at a position 28 cm below the nozzle face. Endless nets made of stainless steel each having a width of 60 cm were placed in parallel at a spacing of 52 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.54 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having, in the thickness direction thereof, a thin fiber main region mainly including thin fibers, a mixed region including thin fibers and thick fibers in a mixed state, a thick fiber main region mainly including thick fibers, a mixed region including thin fibers and thick fibers in a mixed state and a thin fiber main region mainly including thin fibers in this order, where these regions were integrated, not separated from one another, the each of the thick fibers was formed of a hollow linear body having a triangular rice-ball shaped hollow cross section, a hollowness of 20% and a fiber size of 0.70 mm, and each of the thin fibers was formed of a solid linear body having a fiber size of 050 mm. In this net-like structure, the difference in fiber size was 0.20 mm, the total weight ratio of the thin fibers was 40%, the apparent density was 0.040 g/cm$^3$, and the thickness of flattened surface portion was 51 mm. In the net-like structure produced in this example, both of the surface layers were the thin fiber main regions mainly including thin fibers. Therefore, the measurements were carried out by selecting a thin fiber main region mainly including the thinnest fibers and pressurizing from the side of this region.

In the obtained net-like structure, the residual strain after 750 N constant load repeated compression was 7.1%, the 25% compression hardness was 18.0 N/$\phi$100 mm, the 40% compression hardness was 35.7 N/$\phi$100 mm and the hysteresis loss was 26.0% at pressurization from the thin fiber main region side, and no bottom touch feeling was felt by panelists and therefore the evaluation on a bottom touch feeling was rated "A". The results are summarized in Table 1.

As shown in Table 1, in the net-like structure obtained in this example, the fiber size of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/$\phi$100 mm and the 40% compression hardness was greater than or equal to 15 N/$\phi$100 mm at pressurization from the thin fiber main region side. Therefore, no bottom touch feeling was felt by the panelists in the qualitative evaluation. In the net-like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.

[Example 4]

As a nozzle, used was one having a nozzle effective face having lengths of 50 cm in the width direction and 67.6 mm in the thickness direction, on which triple bridge hollow forming orifices for thick fiber formation use having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices for thin fiber formation use having an outer size of 1 mm were zigzag-arranged in the eighth to fourteenth rows in the thickness direction at a width-direction inter-hole pitch of 6 mm and a thickness-direction inter-hole pitch of 5.2 mm. INFUSE D9530.05 (manufactured by The Dow Chemical Company), which was a multiblock copolymer constituted of is an ethylene-$\alpha$-olefin, was used as the polyolefin-based thermoplastic elastomer (B-1) in an amount of 100% by weight, and the polyolefin-based thermoplastic elastomer (B-1) was discharged downward from the nozzle at a spinning temperature (melting temperature) of 240°C at a single-hole discharge rate of 1.8 g/min for hollow forming orifice holes and a single-hole discharge rate of 1.1 g/min for solid forming orifice holes. Cooling water was provided at a position 30 cm below the nozzle face. Endless nets made of stainless steel each having a width of 60 cm were placed in parallel at a spacing of 50 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.43 m/min, thereby solidified to be flattened at both faces in the thickness direction, then cut into a predetermined size, and dried/heated with 70°C hot air for 15 minutes, to obtain a net-like structure.

The obtained net-like structure was a net-like structure having a thin fiber main region mainly including solid-section fibers each having a fiber size of 0.52 mm, a thick fiber main region mainly including hollow-section fibers each having a fiber size of 1.13 mm, a triangular rice-ball shaped cross section and a hollowness of 30%, and a mixed region including thin fibers and thick fibers in a mixed state and located between the thin fiber main region and the thick fiber main region, where these regions were integrated, not separated from one another. In this net-like structure, the difference in fiber size was 0.61 mm, the total weight ratio of the thin fibers was 37%, the apparent density was 0.043 g/cm$^3$, and

the thickness of flattened surface portion was 45 mm.

In the obtained net-like structure, the residual strain after 750 N constant load repeated compression was 13.5%, the 25% compression hardness was 6.2 N/$\phi$100 mm, the 40% compression hardness was 19.1 N/$\phi$100 mm and the hysteresis loss was 44.8% at pressurization from the thin fiber main region side, and no bottom touch feeling was felt by panelists and therefore the evaluation on a bottom touch feeling was rated "A". The results are summarized in Table 1.

As shown in Table 1, in the net-like structure obtained in this example, the fiber size of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/$\phi$100 mm and the 40% compression hardness was greater than or equal to 15 N/$\phi$100 mm at pressurization from the thin fiber main region side. Therefore, no bottom touch feeling was felt by the panelists in the qualitative evaluation. In the net-like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.


[Example 5]

As a nozzle, used was one having a nozzle effective face having lengths of 50 cm in the width direction and 67.6 mm in the thickness direction, on which triple bridge hollow forming orifices for thick fiber formation use having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices for thin fiber formation use having an outer size of 1 mm were zigzag-arranged in the eighth to fourteenth rows in the thickness direction at a width-direction inter-hole pitch of 6 mm and a thickness-direction inter-hole pitch of 5.2 mm. INFUSE D9530.05 (manufactured by The Dow Chemical Company), which was a multiblock copolymer constituted of is an ethylene-$\alpha$-olefin, was used as the polyolefin-based thermoplastic elastomer (B-1) in an amount of 100% by weight, and the polyolefin-based thermoplastic elastomer (B-1) was discharged downward from the nozzle at a spinning temperature (melting temperature) of 240°C at a single-hole discharge rate of 1.8 g/min for hollow forming orifice holes and a single-hole discharge rate of 1.1 g/min for solid forming orifice holes. Cooling water was provided at a position 30 cm below the nozzle face. Endless nets made of stainless steel each having a width of 60 cm were placed in parallel at a spacing of 40 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.84 m/min, thereby solidified to be flattened at both faces in the thickness direction, then cut into a predetermined size, and dried/heated with 70°C hot air for 15 minutes, to obtain a net-like structure.

The obtained net-like structure was a net-like structure having a thin fiber main region mainly including solid-section fibers each having a fiber size of 0.57 mm, a thick fiber main region mainly including hollow-section fibers each having a fiber size of 1.14 mm, a triangular rice-ball shaped cross section and a hollowness of 29%, and a mixed region including thin fibers and thick fibers in a mixed state and located between the thin fiber main region and the thick fiber main region, where these regions were integrated, not separated from one another. In this net-like structure, the difference in fiber size was 0.57 mm, the total weight ratio of the thin fibers was 37%, the apparent density was 0.052 g/cm$^3$, and the thickness of flattened surface portion was 32 mm.

In the obtained net-like structure, the residual strain after 750 N constant load repeated compression was 13.9%, the 25% compression hardness was 6.5 N/$\phi$100 mm, the 40% compression hardness was 16.8 N/$\phi$100 mm and the hysteresis loss was 47.2% at pressurization from the thin fiber main region side, and no bottom touch feeling was felt by panelists and therefore the evaluation on a bottom touch feeling was rated "A". The results are summarized in Table 1.

As shown in Table 1, in the net-like structure obtained in this example, the fiber size of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/$\phi$100 mm and the 40% compression hardness was greater than or equal to 15 N/$\phi$100 mm at pressurization from the thin fiber main region side. Therefore, no bottom touch feeling was felt by the panelists in the qualitative evaluation. In the net-like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.

[Example 6]

As a nozzle, used was one having a nozzle effective face having lengths of 50 cm in the width direction and 77.9 mm in the thickness direction, on which triple bridge hollow forming orifices for thick fiber formation use having an outer size of 3 mm and an inner size of 2.6 mm were zigzag-arranged in the first to tenth rows in the thickness direction at a width-direction inter-hole pitch of 6 mm and a thickness-direction inter-hole pitch of 5.2 mm and solid forming orifices for thin fiber formation use having an outer size of 1 mm were zigzag-arranged in the eleventh to sixteenth rows in the thickness direction at a width-direction inter-hole pitch of 6 mm and a thickness-direction inter-hole pitch of 5.2 mm. DOWLEX 2035G (manufactured by Dow Chemical Company), a random block copolymer constituted of an ethylene-$\alpha$-olefin, 100 wt%, was used as a polyolefin-based thermoplastic elastomer (B-2), discharged downward from the nozzle at a spinning temperature (melting temperature) of 230°C at a single-hole discharge rate of 1.3 g/min for hollow forming orifice holes and a single-hole discharge rate of 0.8 g/min for solid forming orifice holes. Cooling water was provided at a position 32 cm below the nozzle face. Endless nets made of stainless steel each having a width of 60 cm were placed in parallel at a spacing of 60 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.49 m/min, thereby solidified to be flattened at both faces in the thickness direction, then cut into a predetermined size, and dried/heated with 70°C hot air for 15 minutes, to obtain a net-like structure.
The obtained net-like structure was a net-like structure having a thin fiber main region mainly including solid-section fibers each having a fiber size of 0.49 mm, a thick fiber main region mainly including hollow-section fibers each having a fiber size of 0.88 mm, a triangular rice-ball shaped cross section and a hollowness of 33%, and a mixed region including thin fibers and thick fibers in a mixed state and located between the thin fiber main region and the thick fiber main region, where these regions were integrated, not separated from one another. In this net-like structure, the difference in fiber size was 0.39 mm, the total weight ratio of the thin fibers was 38%, the apparent density was 0.033 g/cm$^3$, and the thickness of flattened surface portion was 56 mm.
In the obtained net-like structure, the residual strain after 750 N constant load repeated compression was 14.9%, the 25% compression hardness was 17.3 N/$\phi$100 mm, the 40% compression hardness was 36.8 N/$\phi$100 mm and the hysteresis loss was 43.4% at pressurization from the thin fiber main region side, and no bottom touch feeling was felt by panelists and therefore the evaluation on a bottom touch feeling was rated "A". The results are summarized in Table 1.
As shown in Table 1, in the net-like structure obtained in this example, the fiber size of the thin fibers was greater than or equal to 0.1 mm and less than or equal to 1.5 mm and the total weight ratio of the thin fibers was greater than or equal to 10% and less than or equal to 90%. Therefore, the net-like structure had a soft touch. In addition, in the net-like structure obtained in this example, the fiber size of the thick fibers was greater than that of the thin fibers by greater than or equal to 0.07 mm, and the 25% compression hardness was greater than or equal to 6 N/$\phi$100 mm and the 40% compression hardness was greater than or equal to 15 N/$\phi$100 mm at pressurization from the thin fiber main region side. Therefore, no bottom touch feeling was felt by the panelists in the qualitative evaluation. In the net-like structure produced in this example, the mixed region was present between the thin fiber main region and the thick fiber main region and the residual strain after 750 N constant load repeated compression at pressurization from the thin fiber main region side was less than or equal to 15%. Therefore, the net-like structure had excellent compression durability.

[Comparative Example 1]

As a nozzle, used was one having a nozzle effective face having lengths of 50 cm in the width direction and 67.6 mm in the thickness direction, on which triple bridge hollow forming orifices for thick fiber formation use having an outer size of 3 mm and an inner size of 2.6 mm were zigzag-arranged in the first to eighth rows at a width-direction inter-hole pitch of 10 mm and a thickness-direction inter-hole pitch of 7.5 mm and solid forming orifices for thin fiber formation use having an outer size of 0.7 mm were zigzag-arranged in the ninth to eleventh rows at a width-direction inter-hole pitch of 2.5 mm and a thickness-direction inter-hole pitch of 3.7 mm. The obtained polyester-based thermoplastic elastomer (A-1) was discharged downward from the nozzle at a spinning temperature (melting temperature) of 240°C at a single-hole discharge rate of 2.0 g/min for hollow forming orifice holes, a single-hole discharge rate of 0.5 g/min for solid forming orifice holes, and a whole discharge rate of 1100 g/min. Cooling water was provided at a position 18 cm below the nozzle face. Endless nets made of stainless steel each having a width of 60 cm were placed in parallel at a spacing of 50 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.00 m/min, thereby solidified, then cut into a predetermined size, and dried/heated with 110°C hot air for 15 minutes, to obtain a net-like structure.

The obtained net-like structure was a net-like structure having a thin fiber main region mainly including thin fibers and a thick fiber main region mainly including thick fibers, where these regions were integrated, not separated from each other. In the obtained net-like structure, the width-direction inter-hole pitch of the thick fiber forming orifices and the width-direction inter-hole pitch of the thin fiber forming orifices were so different from each other that loops of thick fibers failed to make their ways into between loops of thin fibers, resulting in no presence of a region including thin fibers and thick fibers in a mixed state to form a thickness.

The thick fibers were formed of hollow linear bodies each having a triangular rice-ball shaped hollow cross section, a hollowness of 28%, and a fiber size of 0.80 mm, and the thin fibers were formed of solid linear bodies having a fiber size of 0.32 mm. The difference in fiber size was 0.48 mm, the total weight ratio of the thin fibers was 27%, the apparent density was 0.046 g/cm$^3$, and the thickness of flattened surface portion was 50 mm.

In the obtained net-like structure, the residual strain after 750 N constant load repeated compression was 15.6%, the 25% compression hardness was 21.9 N/$\phi$100 mm, the 40% compression hardness was 40.3 N/$\phi$100 mm and the hysteresis loss was 23.8% at pressurization from the thin fiber main region side, and no bottom touch feeling was felt by panelists and therefore the evaluation on a bottom touch feeling was rated "A". The results are summarized in Table 1.

As shown in Table 1, in the net-like structure obtained in this comparative example, the residual strain after 750 N constant load repeated compression at pressurization from the thin fiber main region side was greater than 15%. Therefore, the net-like structure had poor compression durability.

[Comparative Example 2]

As a nozzle, used was one having a nozzle effective face having lengths of 100 cm in the width direction and 31.2 mm in the thickness direction, on which orifices of a triple bridge hollow formative cross section having an outer size of 3 mm and an inner size of 2.6 mm were zigzag-arranged at a width-direction inter-hole pitch of 6 mm and a thickness-direction inter-hole pitch of 5.2 mm in 7 rows in the thickness direction. The obtained polyester-based thermoplastic elastomer (A-1) was discharged downward from the nozzle at a spinning temperature (melting temperature) of 240°C at a single-hole discharge rate of 1.5 g/min. Cooling water was provided at a position 28 cm below the nozzle face. Endless nets made of stainless steel each having a width of 200 cm were placed in parallel at a spacing of 27 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure mainly including hollow-section fibers having a triangular rice-ball shaped cross section. The obtained net-like structure had an apparent density of 0.063 g/cm$^3$ and a thickness of flattened surface portion of 25 mm, and the hollow-section fibers had a hollowness of 20% and a fiber size of 0.76 mm.

Also, as a nozzle, used was one having a nozzle effective face having lengths of 100 cm in the width direction and 31.2 mm in the thickness direction, on which solid forming orifices having an outer size of 1 mm were zigzag-arranged at a width-direction inter-hole pitch of 6 mm and a thickness-direction inter-hole pitch of 5.2 mm in 7 rows in the thickness direction. The obtained polyester-based thermoplastic elastomer (A-1) was discharged downward from the nozzle at a melting temperature of 240°C at a single-hole discharge rate of 0.9 g/min. Cooling water was provided at a position 28 cm below the nozzle face. Endless nets made of stainless steel each having a width of 200 cm were placed in parallel at a spacing of 27 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure mainly including solid-section fibers. The obtained net-like structure had an apparent density of 0.038 g/cm$^3$ and a thickness of flattened surface portion of 25 mm, and the solid-section fibers had a fiber size of 0.50 mm.

The obtained net-like structure mainly including solid-section fibers, i.e., thin fibers, and the net-like structure mainly including hollow-section fibers, i.e., thick fibers, were stacked on each other, to form a net-like structure. The entire stacked net-like structure had an apparent density of 0.051 g/cm$^3$ and a thickness of 50 mm. The difference between the fiber size of the hollow-section fibers, i.e., thick fibers, and the fiber size of the solid-section fibers, i.e., thin fibers, was 0.26 mm.

In the stacked net-like structure, the residual strain after 750 N constant load repeated compression was 17.3%, the 25% compression hardness was 32.1 N/ϕ100 mm, the 40% compression hardness was 61.3 N/ϕ100 mm and the hysteresis loss was 26.2% at compression from the side of the net-like structure formed of solid-section fibers, i.e., thin fibers, and no bottom touch feeling was felt by panelists and therefore the evaluation on a bottom touch feeling was rated "A". The results are summarized in Table 1.

As shown in Table 1, in the net-like structure obtained in this comparative example, the residual strain after 750 N constant load repeated compression at pressurization from the side of the net-like structure formed of solid-section fibers, i.e., thin fibers, was greater than 15%. Therefore, the stacked net-like structure had poor compression durability.

It is to be understood that the embodiments and examples disclosed herein are illustrative and not restrictive in every respect. The scope of the present invention should be defined by the appended claims rather than by the description detailed above, and all changes that fall within the meaning and scope equivalent to the claims are intended to be embraced by the claims.

The net-like structure of the present invention meets all of three characteristics, i.e., soft touch upon use, a reduced bottom touch feeling and excellent compression durability. Therefore, the present invention can provide a net-like structure which is suitable for cushion materials used for office chairs, furniture, sofas, beddings such as beds, seats for vehicles such as trains, automobiles, two-wheeled vehicles, baby buggies, and child safety seats, shock-absorbing mats such as floor mats and members for preventing collision and nipping, etc. The present invention therefore greatly contributes to the industrial world.

**Claims**

1. A net-like structure having a three-dimensional random loop bonded structure constituted of a thermoplastic elastomer continuous linear body,
   wherein
   said net-like structure has, in a thickness direction thereof, a thin fiber main region that mainly includes thin fibers having a fiber size of greater than or equal to 0.1 mm and less than or equal to 1.5 mm, a thick fiber main region that mainly includes thick fibers having a fiber size of greater than or equal to 0.4 mm and less than or equal to 3.0 mm and a mixed region that is located between said thin fiber main region and said thick fiber main region and includes said thin fibers and said thick fibers in a mixed state, wherein in the thin fiber main region, the percentage of the number of thin fibers included in a region of interest is greater than or equal to 90% of the total number of fibers included in the region, wherein in the thick fiber main region, the percentage of the number of thick fibers included in a region of interest is greater than or equal to 90% of the total number of fibers included in the region, and wherein said thin fibers are solid-section fibers each having a solid cross section and said thick fibers are hollow-section fibers each having a hollow cross section,
   the fiber sizes of said thick fibers are greater than those of said thin fibers by greater than or equal to 0.07 mm, and the residual strain after 750 N constant load repeated compression at pressurization from the side of said thin fiber main region of said net-like structure is less than or equal to 15%, as measured in accordance with the method specified in the description.

2. The net-like structure according to claim 1, wherein said net-like structure has an apparent density of greater than or equal to 0.005 g/cm$^3$ and less than or equal to 0.20 g/cm$^3$, as measured in accordance with the method specified in the description.

3. The net-like structure according to claim 1 or 2, wherein the hysteresis loss at pressurization from the side of said thin fiber main region of said net-like structure is less than or equal to 60%, as measured in accordance with the method specified in the description.

4. A cushion material including the net-like structure according to any one of claims 1 to 3.

**Patentansprüche**

1. Netzartige Struktur mit einer dreidimensionalen zufälligen schlaufengebundenen Struktur, gebildet aus einem kontinuierlichen linearen Körper aus thermoplastischem Elastomer,
   wobei

die netzartige Struktur in einer Dickenrichtung davon einen Hauptbereich von dünnen Fasern, welcher hauptsächlich dünne Fasern mit einer Fasergröße von mehr als oder gleich 0,1 mm und weniger als oder gleich 1,5 mm einschließt, einen Hauptbereich von dicken Fasern, welcher hauptsächlich dicke Fasern mit einer Fasergröße von mehr als oder gleich 0,4 mm und weniger als oder gleich 3,0 mm einschließt, und einen gemischten Bereich, welcher zwischen dem Hauptbereich von dünnen Fasern und dem Hauptbereich von dicken Fasern angeordnet ist und die dünnen Fasern und die dicken Fasern in einem gemischten Zustand einschließt, aufweist, wobei in dem Hauptbereich von dünnen Fasern der prozentuale Anteil der Anzahl der in einem Bereich von Interesse eingeschlossenen dünnen Fasern mehr als oder gleich 90% der Gesamtanzahl der in dem Bereich eingeschlossenen Fasern beträgt, wobei in dem Hauptbereich von dicken Fasern der prozentuale Anteil der Anzahl der in einem Bereich von Interesse eingeschlossenen dicken Fasern mehr als oder gleich 90% der Gesamtanzahl der in dem Bereich eingeschlossenen Fasern beträgt und wobei die dünnen Fasern Vollquerschnittsfasern, welche jeweils einen Vollquerschnitt aufweisen, sind und die dicken Fasern Hohlquerschnittsfasern, welche jeweils einen Hohlquerschnitt aufweisen, sind, die Fasergrößen der dicken Fasern um mehr als oder gleich 0,07 mm größer sind als diejenigen der dünnen Fasern und

die Restdehnung nach wiederholter Stauchung mit konstanter Belastung von 750 N bei Druckbeaufschlagung von der Seite des Hauptbereichs von dünnen Fasern der netzartigen Struktur weniger als oder gleich 15% beträgt, gemessen in Übereinstimmung mit dem in der Beschreibung angegebenen Verfahren.

2. Netzartige Struktur nach Anspruch 1, wobei die netzartige Struktur eine scheinbare Dichte von mehr als oder gleich 0,005 g/cm$^3$ und weniger als oder gleich 0,20 g/cm$^3$ aufweist, gemessen in Übereinstimmung mit dem in der Beschreibung angegebenen Verfahren.

3. Netzartige Struktur nach Anspruch 1 oder 2, wobei der Hystereseverlust bei Druckbeaufschlagung von der Seite des Hauptbereichs von dünnen Fasern der netzartigen Struktur weniger als oder gleich 60% beträgt, gemessen in Übereinstimmung mit dem in der Beschreibung angegebenen Verfahren.

4. Polstermaterial, einschließend die netzartige Struktur nach einem der Ansprüche 1 bis 3.

**Revendications**

1. Structure en réseau présentant une structure liée par boucles aléatoires tridimensionnelles, constituée d'un corps linéaire continu en élastomère thermoplastique,
dans laquelle
ladite structure en réseau présente, dans son sens de l'épaisseur, une zone principale de fibres fines qui comprend principalement des fibres fines d'une dimension de fibre supérieure ou égale à 0,1 mm et inférieure ou égale à 1,5 mm, une zone principale de fibres épaisses qui comprend principalement des fibres épaisses d'une dimension de fibre supérieure ou égale à 0,4 mm et inférieure ou égale à 3,0 mm, et une zone mixte située entre ladite zone principale de fibres fines et ladite zone principale de fibres épaisses et comprend lesdites fibres fines et lesdites fibre épaisses dans un état mixte, dans laquelle, dans la zone principale de fibres fines, le pourcent du nombre de fibres fines comprises dans une zone d'intérêt est supérieur ou égal à 90% du nombre total de fibres incluses dans la zone, dans laquelle, dans la zone principale de fibres épaisses, le pourcent du nombre de fibres épaisses comprises dans une zone d'intérêt est supérieur ou égal à 90% du nombre total de fibres comprises dans la zone, et dans laquelle lesdites fibres fines sont des fibres de section pleine présentant chacune une coupe transversale pleine et lesdites fibres épaisses sont des fibres de section creuse présentant chacune une coupe transversale creuse,
les dimensions de fibres desdites fibres épaisses sont supérieures à celles desdites fibres fines de plus de ou de 0,07 mm, et
la fatigue résiduelle après compression répétée de charge constante de 750 N lors d'une mise sous pression depuis le côté de ladite zone principale de fibres fines de ladite structure en réseau, est inférieure ou égale à 15%, telle que mesurée selon la méthode spécifiée dans la description.

2. Structure en réseau selon la revendication 1, dans laquelle ladite structure en réseau présente une densité apparente supérieure ou égale à 0,005 g/cm$^3$ et inférieure ou égale à 0,20 g/cm$^3$, telle que mesurée selon la méthode spécifiée dans la description.

3. Structure en réseau selon la revendication 1 ou 2, dans laquelle la perte d'hystérésis lors d'une mise sous pression depuis le côté de ladite zone principale de fibres fines de ladite structure en réseau est inférieure ou égale à 60%, telle que mesurée selon la méthode spécifiée dans la description.

4. Matière de coussin comprenant la structure en réseau selon l'une quelconque des revendications 1 à 3.

FIG.1A

FIG.1B

FIG.1C

**EP 3 290 557 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7068061 A
- JP 7173753 A
- JP 7189105 A
- EP 3064628 A1
- EP 3064627 A1
- EP 1665957 A1
- JP 2014194099 A